# EUROPEAN PATENT APPLICATION

(11) **EP 3 565 376 A1**
(43) Date of publication of application: **06.11.2019**
(21) Application number: 17907310.1
(22) Date of filing: 07.12.2017
(51) Int. Cl.: H04W 88/02

(54) **MAINBOARD DEVICE AND SYSTEM**

(30) Priority: 24.04.2017 CN 201710270537
(71) Applicant: ZTE Corporation, Shenzhen, Guangdong 518057 (CN)
(72) Inventor: SHU, Chaofan, Shenzhen Guangdong 518057 (CN); LIU, Yang, Shenzhen Guangdong 518057 (CN); ZHOU, Chuangzhu, Shenzhen Guangdong 518057 (CN)
(74) Representative: Herzog IP Patentanwalts GmbH
(86) International application number: PCT/CN2017/115097
(87) International publication number: WO 2018/196387

(57) **Abstract**

Provided are a mainboard device and a mainboard system. The mainboard device includes: a metal dome bridge configured to be connected to a USB plug of a mainboard; and a metal plate configured to be connected to the mainboard, wherein at least one component is arranged on the metal plate, and an adjustable coupling capacitance is formed between the metal dome bridge and the metal plate.

## Description

### Field of the Invention

The present disclosure relates to the technical field of communications, for example, a mainboard device and a mainboard system.

### Background of the Invention

With the development of wireless broadband access technology and industry, business needs are increasingly wide. The market not only has higher requirements for performance of wireless network cards, but also has higher requirements for appearance of the wireless network cards. With the expansion of requirements for the product appearance, more and more data card projects require that a rotatable universal serial bus (USB) be made, and some products even require that a dually-rotatable or side-rotatable USB be made. Emergence of foldable and rotatable USB network cards gives people a refreshing feeling. However, compared with traditional direct-insert USB network cards, a foldable and rotatable USB network card, due to restrictions of its design and ID, usually renders a mainboard unable to form complete "ground". Especially for such a product as data card having a small dimension and high requirements for "ground", ground incompleteness greatly affects the air (OTA) indicators at high frequency and low frequency.

Traditional solutions for improving grounding of rotatable wireless network cards include manners such as adding a connection line between the mainboard and a USB plug, spraying conductive paint on a structural member, increasing a width of a metal dome bridge, forming a metal dome bridge on a structural member by hot melting, so as to ensure connection with the mainboard.

For such a problem as ground incompleteness caused by a special design, traditional solutions for improving grounding of rotatable network cards include, for example, increasing a diameter of a ground line, spraying conductive paint on a structural member, attaching conductive foam, increasing a width of a metal dome bridge and so on. However, the traditional handling methods can only improve grounding and make the U plug be grounded more sufficient, but cannot solve the ground incompleteness problem caused by special design.

With respect to the above problems existing in related technologies, no effective solution has been provided so far.

### Summary of the Invention

The following is summary of the subject matter that is described in detail herein. The summary is not intended to limit the protection scope of the claims.

A mainboard device and a mainboard system are provided in embodiments of the present disclosure so as to at least solve the problem that a terminal product in related technologies has unsatisfactory active efficiency of an antenna due to special design.

According to one embodiment of the present disclosure, a mainboard device is provided. The mainboard device includes: a metal dome bridge, which is connected to a USB plug of a mainboard; and a metal plate, which is connected to the mainboard. The metal plate is provided thereon with at least one component. An adjustable coupling capacitance is formed between the metal dome bridge and the metal plate.

According to another embodiment of the present disclosure, a mainboard system is provided. The mainboard system includes: a mainboard, a metal dome bridge, and a metal plate. The mainboard includes a USB plug. The metal dome bridge is configured to be connected to the USB plug of the mainboard. The metal plate is configured to be connected to the mainboard, and the metal plate is provided thereon with at least one component. An adjustable coupling capacitance is formed between the metal dome bridge and the metal plate.

Alternatively, the metal plate is made of: a metal copper foil or a metal aluminum foil.

Alternatively, the mainboard further includes a shielding case. The metal plate is connected to the mainboard via the shielding case.

Alternatively, the at least one component provided on the metal plate includes: a rectangular groove, a metal branch positioned within the rectangular groove, and a lumped element. The lumped element is used to bridge and connect the metal branch and the metal plate.

Alternatively, the number of the lumped element is one or more than one.

Alternatively, the rectangular groove is a T-slot formed by fitting two rectangles together.

Alternatively, a component state of the at least one component includes at least one of the following: a state of the lumped element, a state of the metal branch, and a state of the rectangular groove. The state of the lumped element includes a size of the lumped element and the number thereof; the state of the metal branch includes a size of the metal branch; and the state of the rectangular groove includes a size of the rectangular groove, a shape thereof, a position thereof, and the number thereof.

Alternatively, when the component state changes, a surface current on the mainboard generates a corresponding inductance.

Alternatively, the metal dome bridge is in direct contact or in coupling contact with the mainboard.

Alternatively, the metal dome bridge is mounted independently, or is configured to be formed on a housing structural member of the mainboard by hot melting.

Alternatively, the coupling capacitance is related to at least one of the following: a dimension of the metal plate, a dimension of the metal dome bridge, and a relative position between the metal plate and the metal dome bridge.

Alternatively, the metal dome bridge and the metal plate are parallel to each other in spatial structure.

Alternatively, the metal plate is a ground plate of the mainboard, or the metal plate is connected to a ground plate of the mainboard.

Based on embodiments of the present disclosure, the mainboard device and the mainboard system include a metal dome bridge which is connected with a USB plug of a mainboard and a metal plate which is connected to the mainboard and is provided thereon with a loadable lumped element. An adjustable coupling capacitance is formed between the metal dome bridge and the metal plate. Because of the introduction of the metal plate, a component state of a component on the metal plate corresponds to an inductance generated by a surface current on the mainboard, which can change current distribution on the mainboard, effectively improve active efficiency of an antenna; moreover, the mainboard device and the mainboard system are easy to realize, and solve the problem that a terminal product in related technologies has unsatisfactory active efficiency of the antenna due to special design.

### Brief Description of the Drawings

The accompanying drawings illustrated here are used for providing further understanding of the present disclosure and constitute one part of the present disclosure. Exemplary embodiments of the present disclosure and descriptions thereof are used for explaining the present disclosure, rather than limiting the present disclosure unduly.
Fig. 1 shows a structure of a mainboard device and a mainboard system according to an embodiment of the present disclosure;
Fig. 2 shows a principle of an embodiment of the present disclosure; and
Fig. 3 schematically shows an exploded view of a structure of a product according to an embodiment of the present disclosure.

### Detailed Description of the Embodiments

The present disclosure will be described in detail below with reference to the accompanying drawings in combination with embodiments. It should be noted that embodiments of the present disclosure and features in the embodiments may be combined with one another.

It should be noted that, terms such as "first" and "second" in the description and claims of the present disclosure and the above accompanying drawings are used for distinguishing similar objects and are not necessarily used for describing a specific order or sequence.

### Embodiment One

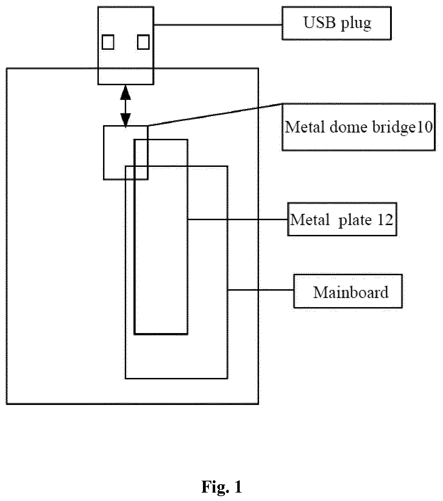

In the present embodiment, a mainboard device and a mainboard system are provided. Fig. 1 shows a structure of the mainboard device and the mainboard system according to an embodiment of the present disclosure.

The mainboard device includes a metal dome bridge 10 and a metal plate 12. The metal dome bridge 10 is configured to be connected with a USB plug of a mainboard. The metal plate 12 is configured to be connected to the mainboard, and the metal plate 12 is provided thereon with one or more components. An adjustable coupling capacitance is formed between the metal dome bridge and the metal plate.

The mainboard system includes a mainboard, a metal dome bridge, and a metal plate. The mainboard includes a USB plug. The metal dome bridge may be connected with a USB plug of the mainboard. The metal plate may be configured to be connected to the mainboard, and the metal plate is provided thereon with one or more components. An adjustable coupling capacitance is formed between the metal dome bridge and the metal plate.

According to the mainboard device and the mainboard system of the present embodiment, the mainboard device and the mainboard system include a metal dome bridge which is connected with a USB plug of a mainboard, and a metal plate which is connected to the mainboard and is provided thereon with one or more components. An adjustable coupling capacitance is formed between the metal dome bridge and the metal plate. Because of the introduction of the metal plate, current distribution on the mainboard can be changed, and active efficiency of an antenna can be effectively improved; moreover, the mainboard device and the mainboard system are easy to realize, and solve the problem that a terminal product in related technologies has unsatisfactory active efficiency of the antenna due to special design.

Alternatively, the mainboard in the mainboard system may be a mainboard arranged in a wireless network card, or may be a mainboard that is included in other devices having a radio frequency identification function. A connection manner between the metal dome bridge and the USB plug is not limited.

The metal plate in the present embodiment is made of a metal copper foil or a metal aluminum foil, or other conductive materials.

Alternatively, the mainboard further includes a shielding case. The metal plate is connected to the mainboard via the shielding case, and the metal plate may also be connected to the mainboard directly.

Alternatively, the metal plate is provided thereon with the following components: a rectangular groove, a metal branch positioned within the rectangular groove, and a lumped element. The lumped element is used to bridge and connect the metal branch and the metal plate. Alternatively, the number of the lumped element is one or more than one, and a size of the lumped element is loadable.

Alternatively, the rectangular groove is a T-slot formed by fitting two rectangles together.

Alternatively, a component state of the one or more components includes at least one of the following: a state of the lumped element, a state of the metal branch, and a state of the rectangular groove. The state of the lumped element includes: a size of the lumped element and the number thereof; the state of the metal branch includes: a size of the metal branch; and the state of the rectangular groove includes: a size of the rectangular groove, a shape thereof, a position thereof, and the number thereof. When the component state changes, a surface current on the mainboard generates a corresponding inductance. The specific component state may be adjusted according to project requirements and a design layout. Based on an operation frequency band actually required, in the meantime of adjusting dimensions of the metal plate and the metal dome bridge and a relative position thereof so as to change a coupling capacitance therebetween, an inductance generated by the surface current on the mainboard when the surface current goes around a gap can be changed by adjusting the size of the lumped element, the dimension of the metal branch, the dimension and position of the rectangular position (or a state of other components).

Alternatively, the metal dome bridge and the mainboard are in direct contact or in coupling contact.

Alternatively, the metal dome bridge is mounted independently, or is formed on a housing structural member of the mainboard by hot melting.

Alternatively, the coupling capacitance is related to at least one of the following: the dimension of the metal plate, the dimension of the metal dome bridge, and the relative position between the metal plate and the metal dome bridge.

Alternatively, the metal dome bridge and the metal plate are parallel in spatial configuration.

In the present embodiment, the metal plate is a ground plate of the mainboard, or the metal plate is connected to a ground plate of the mainboard.

### Embodiment Two

The present embodiment relates to a solution for improving active performance of a special design product among wireless terminal device products, which can effectively solve the problem that a terminal product has unsatisfactory active efficiency of an antenna due to special design and can apply to an existing LTE wireless network card.

The present embodiment provides a solution for improving active efficiency of an antenna of a mainboard having special design. The solution enhances grounding of a U plug (USB plug) and meanwhile changes current distribution on the mainboard, which improves active efficiency of the antenna and is easy to realize. Moreover, batch production can be implemented, and better consistency can be achieved.

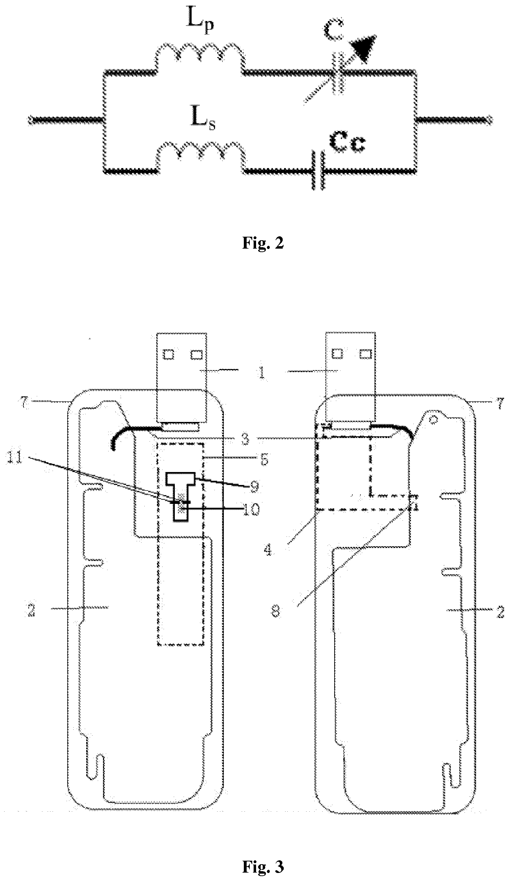

The principle of the present embodiment is that a metal dome connected with a U plug (USB plug) of a mainboard and a metal plate that is connected to the mainboard and provided thereon with a loadable lumped element are coupled together; and the loadable lumped element may enable a surface current on the metal plate connected to the mainboard to flow around a gap, so that a flowing path of the current is changed and that distribution of the surface current on the mainboard is changed. Fig. 2 shows the principle of an embodiment of the present disclosure. An equivalent circuit model is as shown in Fig. 2. Lp represents an inductance generated when the current goes around the gap; Ls represents an inductance generated when the current flows through the loadable lumped element; and C is the loadable lumped element. Cc is a coupling capacitance between a metal copper foil and a metal dome bridge. By adjusting the loadable lumped element C and the coupling capacitance Cc, current distribution on the mainboard having special design can be changed, so that the problem of ground incompleteness due to special design can be remedied and that active efficiency of the antenna can be improved.

By using the connection solution of the present embodiment, OTA performance of a side-rotatable and foldable network card having special design can be effectively improved, and meanwhile good stability and consistency can be achieved.

The product to which the present embodiment is applied may be a wireless access terminal. A USB plug 1 has foldable and rotatable design. Operation frequencies of a network card mainly include: 700-960 MHz, 1710-2170 MHz, and 3500-3690 MHz.

Fig. 3 schematically shows an exploded view of a structure of the product according to the present embodiment. The structure includes: a USB plug 1, a mainboard 2, a FPC line 3 that connects the U plug with the mainboard; a metal dome bridge 4, a conductive foam 5 (metal plate 5); a gap (not shown) of the conductive foam; a wireless network card structural member 7; a contact point 8 between the metal dome bridge and the mainboard; a T-slot 9; a metal branch 10, and a loadable lumped element 11.

A traditional handling method is to form a metal dome bridge 4 on a structural member by hot melting with a dome corner of the metal dome bridge lifting upward by a certain angle so as to ensure a good connection to the mainboard 2 or a metal shielding case on the mainboard 2. This method can effectively improve OTA performance of a rotatable or telescopic USB modem having a mainboard with traditional design. However, for a network card having a mainboard with special design, OTA performance thereof still cannot meet requirements.

In the present embodiment, the metal dome bridge 4 is formed on the wireless network card structural member 7 by hot melting, and a connection manner between the metal dome bridge and the mainboard may be selected from a direct contact or a coupling contact based on requirements of special projects. The metal plate 5 is attached to the mainboard 2 or the metal shielding case of the mainboard 2, so that the metal plate is connected to the mainboard (or the metal shielding case of the mainboard). The T-slot 9 is formed on the metal plate 5, and the metal branch 10 is arranged in the center of the T-slot. A pair of loadable lumped elements 11 bridges and connects the metal branch and the metal plate. In an adjustment and test process, based on an operation frequency band actually required, a coupling capacitance Cc between the metal plate 5 and the metal dome bridge 4 may be changed by properly adjusting a dimension of the metal plate 5, a dimension of the metal dome bridge 4, and a relative position between the metal plate 5 and the metal dome bridge; meanwhile, an inductance Lp generated by the surface current when the surface current on the mainboard flows around a gap may be changed by adjusting a size of the loadable lumped element, a dimension of the metal branch, and a dimension and a position of the T-slot 9; distribution of the current on the mainboard around the T-shaped gap increases a current path, which further adjusts low frequency performance; by adjusting the loadable lumped element to change an inductance Lp generated by the current flowing around the loaded lumped element, and adjusting the relative position between the metal plate 5 and the metal dome bridge 4 to adjust a coupling value therebetween, high frequency performance of the product is further adjusted. Simulation and experiments show that this solution can effectively change the distribution of the surface current on the mainboard and remedy ground incompleteness of the mainboard caused by special design so as to improve performance of the antenna.

Alternatively, the USB plug 1 of the wireless network card may be foldable and rotatable, side-rotatable, or telescopic; and the metal plate 5 connected with the mainboard of the wireless network card may be directly attached to the mainboard or the shielding case of the mainboard.

Alternatively, a width, a form, a length of the metal plate 5 connected with the mainboard of the wireless network card may be adjusted based on a design layout and space needs.

Alternatively, the metal plate 5 connected with the mainboard of the wireless network card can be selected from alternative components such as a metal copper foil, a metal aluminum foil and so on based on an experiment layout and design requirements .

Alternatively, a width, a form, a length, and the number of the T-slot 9 in the metal plate 5 connected with the mainboard of the wireless network card may be adjusted based on requirements of a specific project.

Alternatively, a width, a form, a length, and the number of the metal branch 10 arranged within the T-slot 9 of the wireless network card may be adjusted based on requirements of a specific project.

Alternatively, the number and a form of the lumped element 11 loaded within the T-slot 9 of the wireless network card may be adjusted based on requirements of a specific project.

Alternatively, a width, a form, and a length of the metal dome bridge 4 arranged between the USB plug 1 and the mainboard may be adjusted based on requirements of a design layout.

Alternatively, the metal dome bridge 4 arranged between the USB plug 1 and the mainboard may be mounted independently, and may also be formed on the structural member by hot melting.

Alternatively, the metal dome bridge 4 arranged between the USB plug 1 and the mainboard may be in direct contact or in coupling contact with the mainboard; and a contact position may be adjusted properly based on design requirements.

The above is only an embodiment of the present disclosure being applied to a wireless access product. Any modification, equivalent replacement, improvement and so on to aspects such as a shape and a position of the metal dome bridge, an attachment position and a size of the metal copper foil should all fall into the protection scope of the present disclosure.

The wireless device in the present embodiment includes but not limited to wireless network cards, and may be applied to all circumstances where the antenna technology may be used by wireless access.

Take LTE Band1(1900 MHz)/Band18(800 MHz)/band42(3500 MHz) for example, if a traditional solution of improving grounding only by using the metal dome bridge is adopted, under the circumstance that passive efficiency of the antenna meets the requirement (40-50%), total radiated power (TRP) of a high and low frequency antennas can only reach 14-15 dBm. When the solution provided by the present disclosure is used, if only the T-slot is provided in a metal ground plate, medium and low frequency B1/18 TRP may reach 18-19 dBm, which can meet design requirements. However, requirements cannot be met if the antenna operates in the B42 frequency band of 3.5GHz. High frequency B42 TRP can reach 18-19 dBm with an increase of about 4-5 dBm by loading the lumped element in the T-slot and properly adjusting relative positions of respective components in the T-slot and the size of the loaded lumped element according to the design solution of the present embodiment. In this case, properties of the antenna are not changed, and the medium and low frequency can still meet the requirements. Performance requirement is thus achieved.

The above descriptions are only optional embodiments of the present disclosure, and the present disclosure may have various modifications and variations for one skilled in the art.

### Industrial Applicability

Based on embodiments of the present disclosure, the mainboard device and the mainboard system include a metal dome bridge which is connected to a USB plug of a mainboard, and a metal plate which is connected to the mainboard and is provided thereon with a loadable lumped element. An adjustable coupling capacitance is formed between the metal dome bridge and the metal plate. Because of introduction of the metal plate, a component state of the component on the metal plate corresponds to an inductance generated by a surface current on the mainboard, which can change current distribution on the mainboard, effectively improve active efficiency of an antenna; moreover, the mainboard device and the mainboard system are easy to realize, and solve the problem that a terminal product in related technologies has unsatisfactory active efficiency of the antenna due to special design.

## Claims

1. A mainboard device, **characterized in that**, comprising:
a metal dome bridge, which is configured to be connected to a universal serial bus USB plug of a mainboard; and
a metal plate, which is configured to be connected to the mainboard, wherein the metal plate is provided thereon with at least one component;
wherein an adjustable coupling capacitance is formed between the metal dome bridge and the metal plate.

2. The mainboard device according to claim 1, **characterized in that**, the metal plate is made of: a metal copper foil or a metal aluminum foil.

3. The mainboard device according to claim 1, **characterized in that**, the metal plate is configured to be connected to the mainboard via a shielding case of the mainboard.

4. The mainboard device according to claim 1, **characterized in that**, the at least one component provided on the metal plate comprises: a rectangular groove, a metal branch positioned within the rectangular groove, and a lumped element, wherein the lumped element is used to bridge and connect the metal branch and the metal plate.

5. The mainboard device according to claim 4, **characterized in that**, the number of the lumped element is one or more than one.

6. The mainboard device according to claim 4, **characterized in that**, the rectangular groove is a T-slot formed by fitting two rectangles together.

7. The mainboard device according to claim 4, **characterized in that**, a component state of the at least one component comprises at least one of the following: a state of the lumped element, a state of the metal branch, and a state of the rectangular groove,
wherein the state of the lumped element comprises a size of the lumped element and the number of the lumped element; the state of the metal branch comprises a size of the metal branch; and the state of the rectangular groove comprises a size of the rectangular groove, a shape of the rectangular groove, a position of the rectangular groove, and the number of the rectangular groove.

8. The mainboard device according to claim 7, **characterized in that**, when the component state changes, a surface current on the mainboard generates a corresponding inductance.

9. The mainboard device according to claim 1, **characterized in that**, the metal dome bridge is configured to be in direct contact or in coupling contact with the mainboard.

10. The mainboard device according to claim 1, **characterized in that**, the metal dome bridge is mounted independently, or is configured to be formed on a housing structural member of the mainboard by hot melting.

11. The mainboard device according to claim 1, **characterized in that**, the coupling capacitance is related to at least one of the following: a dimension of the metal plate, a dimension of the metal dome bridge, and a relative position between the metal plate and the metal dome bridge.

12. The mainboard device according to claim 1, **characterized in that**, the metal dome bridge and the metal plate are parallel to each other in spatial structure.

13. A mainboard system, **characterized in that**, comprising:
a mainboard, which comprises a universal serial bus USB plug;
a metal dome bridge, which is configured to be connected to the USB plug of the mainboard; and
a metal plate, which is configured to be connected to the mainboard, wherein the metal plate is provided thereon with at least one component;
wherein an adjustable coupling capacitance is formed between the metal dome bridge and the metal plate.

14. The mainboard system according to claim 13, **characterized in that**, the mainboard further comprises a shielding case, and wherein the metal plate is further configured to be connected to the mainboard via the shielding case.

15. The mainboard system according to claim 13, **characterized in that**, the at least one component provided on the metal plate comprises: a rectangular groove, a metal branch positioned within the rectangular groove, and a lumped element, wherein the lumped element is used to bridge and connect the metal branch and the metal plate.

16. The mainboard system according to claim 15, **characterized in that**, a component state of the at least one component comprises at least one of the following:
a state of the lumped element, a state of the metal branch, and a state of the rectangular groove,
wherein the state of the lumped element comprises a size of the lumped element and the number of the lumped element; the state of the metal branch comprises a size of the metal branch; and the state of the rectangular groove comprises a size of the rectangular groove, a shape of the rectangular groove, a position of the rectangular groove, and the number of the rectangular groove.

17. The mainboard system according to claim 16, **characterized in that**, when the component state changes, a surface current on the mainboard generates a corresponding inductance.

18. The mainboard system according to claim 13, **characterized in that**, the metal dome bridge is configured to be in direct contact or in coupling contact with the mainboard.

19. The mainboard system according to claim 13, **characterized in that**, the metal dome bridge is mounted independently, or is configured to be formed on a housing structural member of the mainboard by hot melting.

20. The mainboard system according to any one of claims 13 to 19, **characterized in that**, the metal plate is a ground plate of the mainboard, or the metal plate is configured to be connected to a ground plate of the mainboard.
